# FASCICULE DE BREVET EUROPEEN

(11) **EP 1 729 359 B1**
(45) Date de publication et mention de la délivrance du brevet: **10.08.2011**
(21) Numéro de dépôt: 05300447.9
(22) Date de dépôt: 02.06.2005
(51) Int. Cl.: H01M 2/10

(54) **Dispositif de retenue et de connexion pour pile**
Halte- und Anschlussvorrichtung für eine Batterie
Device for retaining and connecting a battery

(43) Date de publication de la demande: 06.12.2006
(73) Titulaire: Delphi Technologies, Inc., Troy, MI 48007 (US)
(72) Inventeur: Jawdoszyn, Claude, 95110 Sannois (FR)
(74) Mandataire: Robert, Vincent

(56) Documents cités:
- EP-A- 1 094 548
- US-A1- 2002 142 648
- PATENT ABSTRACTS OF JAPAN vol. 009, no. 151 (P-367), 26 juin 1985 (1985-06-26) & JP 60 029682 A (MATSUSHITA DENKI SANGYO KK), 15 février 1985 (1985-02-15)

## Description

La présente invention se rapporte à un dispositif de retenue et de connexion pour une pile de forme aplatie. En particulier, la présente invention se rapporte à un tel dispositif destiné à retenir et connecter une pile de forme aplatie sur un support, par exemple un circuit imprimé.

Il existe de nombreux modèles de dispositifs de retenue et de connexion pour pile, également appelés portes piles. Ces dispositifs ont pour but de connecter les deux pôles d'une pile ou de plusieurs piles mises en série à un circuit électrique, et de maintenir la ou les piles en place. Le circuit électrique est par exemple réalisé sous la forme d'un circuit imprimé, et est intégré dans un appareil électrique, par exemple une télécommande de verrouillage des ouvrants d'un véhicule ou une télécommande pour télévision.

Un premier type de dispositif de retenue et de connexion pour une pile peut être qualifié de type déporté. Les dispositifs de ce type sont soit associés au boîtier de l'appareil, soit comprennent un boîtier propre. Le boîtier permet de maintenir la pile. Des lames métalliques souples assurent le contact électrique avec les pôles de la pile.

Ce type de dispositif présente plusieurs inconvénients. En raison des dispersions dimensionnelles entre le boîtier, les lames souples et le circuit imprimé, il est possible que la pile se déplace lors de l'utilisation. Il en résulte des risques de microcoupures de l'alimentation, et des problèmes de corrosion des surfaces en contact. De plus, ce type de dispositif comprend nécessairement plusieurs pièces. Il est donc compliqué à fabriquer. L'expérience a également révélé que certains dispositifs de ce type, dans lesquels la pile est maintenue par clipsage, n'étaient pas suffisamment fiables, car la pile est susceptible de se déclipser en cas de vibrations.

Un autre type de dispositif de retenue et de connexion pour une pile peut être qualifié de type monobloc. Les dispositifs de ce type comprennent un réceptacle pour la pile et sont destinés à être fixé sur le circuit imprimé.

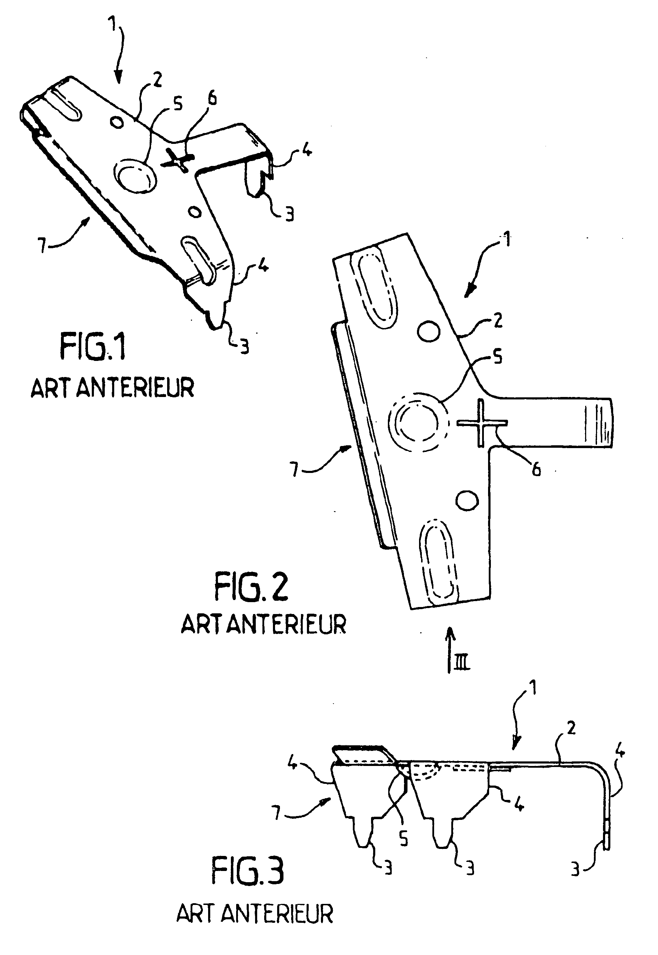

Les figures 1 à 3 représentent un exemple connu de dispositif de retenue et de connexion du type monobloc. Le dispositif 1 est réalisé en une seule pièce métallique et est destiné à être fixé sur un circuit imprimé. Il comprend une électrode de retenue 2 qui, lorsque le dispositif est fixé sur un circuit imprimé, s'étend sensiblement parallèlement et à distance du circuit imprimé. Ainsi, une pile plate peut être placée entre le circuit imprimé et l'électrode 2, avec une première portion de contact de la pile en contact avec une électrode de contact présente sur le circuit imprimé, et une deuxième portion de contact de la pile en contact avec l'électrode 2. Le dispositif 1 comprend trois ergots 3, destinés à être placés et soudés dans des trous ménagés dans le circuit imprimé. Ainsi, les ergots 3 assurent la fixation du dispositif 1 sur le circuit imprimé. Chaque ergot 3 est relié à l'électrode 2 par une patte 4, agencée sensiblement perpendiculairement à l'électrode 2. Les pattes 4 assurent une liaison électrique entre les ergots 3 et l'électrode 2. Ainsi, les ergots 3 assurent également la connexion électrique entre l'électrode 2 et le circuit imprimé. Les ergots 3 et les pattes 4 sont agencés de manière à laisser un passage 7 libre pour la pile. En faisant glisser la pile dans le passage 7, parallèlement au circuit imprimé, il est possible de remplacer une pile usagée par une pile neuve.

L'électrode 2 présente, en son centre, un enfoncement 5. La profondeur de l'enfoncement 5 est telle que, lorsque la pile est placée entre l'électrode 2 et le circuit imprimé, l'électrode 2 est légèrement déformée élastiquement. Ainsi, l'électrode 2 applique, par l'intermédiaire de l'enfoncement 5, une pression de contact sur la pile, qui a pour effet de maintenir la pile en place. L'électrode 2 présente également un marquage 6 indiquant le sens dans lequel il faut placer la pile.

Ce dispositif présente plusieurs inconvénients. Pour placer ou retirer une pile, il est nécessaire de la faire glisser dans le passage 7. Pour cela, il faut disposer d'un espace latéral libre à côté du dispositif. Le circuit imprimé et le boîtier dans lequel il est intégré doivent donc être conçus de manière à laisser un espace libre à côté du dispositif. Pour assurer une pression de contact suffisante, il est nécessaire de dimensionner précisément le dispositif 1 et en particulier l'enfoncement 5. Si l'enfoncement 5 n'est pas assez profond, la pile peut bouger en cas de vibration. Il en résulte des risques de microcoupures de l'alimentation, et des problèmes de corrosion des surfaces en contact. Si l'enfoncement 5 est trop profond, il y a un risque de déformer plastiquement l'électrode 2.

Le document JP 60 029682 décrit un dispositif selon le préambule de la revendication 1.

Le but de l'invention est de fournir un dispositif de retenue et de connexion pour une pile de forme aplatie, qui ne présente pas au moins certains des inconvénients précités de l'art antérieur.

Pour cela, l'invention fournit un dispositif selon la revendication 1.

Ainsi, quand l'électrode de retenue est dans la position de libération, il est possible de placer ou de remplacer la pile facilement. Il n'est pas nécessaire de prévoir un espace libre à côté du dispositif. Le dispositif de retenue et de connexion est donc utilisable sur un support de petite taille.

Selon ces caractéristiques, il suffit de désengager l'électrode de retenue de l'organe de verrouillage, pour que l'électrode de retenue prenne sa position de libération.

Avantageusement, ledit organe de verrouillage est solidaire dudit organe de fixation.

Selon un mode de réalisation particulier, ladite électrode de retenue comprend une lame élastique présentant une courbure dont la convexité est tournée vers le support dans ladite position de retenue, ladite lame élastique étant apte à se déformer élastiquement dans ladite position de retenue de manière à exercer une pression de contact sur ladite pile.

Ces caractéristiques permettent d'empêcher le déplacement de la pile, même en cas de vibration, sans nécessiter un dimensionnement très précis, car la lame élastique se déforme de manière à assurer une pression de contact adaptée. On évite ainsi les risques de microcoupures et de corrosion des surfaces en contact. La forme courbée de la lame élastique permet de minimiser les risques de déformation plastique.

De préférence, ladite électrode de retenue présente une extrémité liée de manière pivotante audit organe de fixation et une extrémité libre muni d'un élément d'accrochage apte à coopérer avec ledit organe de verrouillage et est conformée de manière à être apte à s'allonger élastiquement, ledit organe de verrouillage étant conformé de manière à imposer un allongement de l'électrode de retenue lors de l'engagement ou du dégagement avec ledit organe de verrouillage.

Ainsi, on peut facilement engager ou désengager l'électrode de retenue de l'organe de verrouillage, en déformant l'électrode de retenue pour qu'elle s'allonge. De plus, on obtient un verrouillage résistant aux vibrations grâce à la déformation élastique de l'électrode de retenue.

Avantageusement, le dispositif présente une surface de base destinée à être appliquée sur le support lorsque le dispositif est fixé sur le support, l'organe de verrouillage présentant une surface de came tournée à l'opposée de ladite surface de base, ladite surface de came étant située au droit de l'extrémité libre de l'électrode de retenue et étant inclinée vers ladite surface de base en s'éloignant de ladite extrémité liée de l'électrode de retenue de manière à provoquer l'allongement de ladite électrode de retenue en réponse à une pression de ladite extrémité libre contre ladite surface de came.

Selon un mode de réalisation particulier, le dispositif comprend un corps apte à délimiter au moins un côté d'un espace de réception pour ladite pile, ledit corps étant solidaire de l'organe de fixation destiné à fixer le dispositif sur le support. Par exemple, le corps peut être globalement cylindrique pour entourer sensiblement l'espace de réception.

De préférence, le corps comprend une surface de base destinée à être appliquée sur le support, ledit organe de fixation état liée à ladite surface de base du corps, le corps comprenant une surface supérieure opposée à ladite surface de base, l'électrode de retenue étant liées à ladite surface supérieure du corps.

Avantageusement, l'électrode de retenue est liée au corps au niveau d'une portion de liaison du corps, le corps comprenant au moins un bras s'étendant de manière incurvée en s'éloignant à partir de ladite portion de liaison pour définir l'espace de réception dans la concavité dudit bras, ledit organe de verrouillage étant lié au corps au niveau d'une extrémité dudit bras opposée à ladite portion de liaison.

Selon un mode de réalisation particulier, ledit moyen de sollicitation élastique comprend une charnière élastique reliant ladite électrode de retenue audit corps.

De préférence, ladite électrode de retenue présente, à son extrémité opposée à ladite charnière élastique, deux portions en saillie transversalement à l'électrode de retenue, ledit organe de verrouillage comprenant deux encoches ménagées dans ledit corps à l'opposé de ladite charnière élastique, lesdites portions en saillies coopérant avec lesdites encoches dans ladite position de retenue de ladite électrode de retenue.

Avantageusement, lesdites encoches sont ouvertes du côté destiné à être tourné vers le support.

Selon un mode de réalisation particulier, ledit corps présente une ouverture latérale permettant de manipuler ladite pile avec un doigt, lorsque ladite pile est dans ledit espace de réception.

De préférence, le dispositif comprend au moins un ergot métallique lié à l'électrode de retenue, ledit ergot métallique constituant à la fois ledit organe de fixation et ledit organe de connexion.

Avantageusement, ledit au moins un ergot est fixé audit corps.

Selon un mode de réalisation particulier, ledit dispositif est réalisé en une seule pièce de métal élastique.

Dans ce cas, le dispositif peut être facilement fabriqué, par exemple en découpant une forme adaptée dans une tôle métallique plane, puis en conformant cette forme à l'aide d'une presse à froid.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective d'un exemple de dispositif de retenue et de connexion pour pile aplatie, selon l'art antérieur ;
- la figure 2 est une vue de dessus du dispositif de la figure 1 ;
- la figure 3 est une vue de face du dispositif de la figure 1 ;
- la figure 4 est une vue en perspective d'un dispositif de retenue et de connexion pour pile aplatie, selon un mode de réalisation de l'invention ;
- la figure 5 est une vue éclatée d'un ensemble comprenant un circuit imprimé, une pile, et le dispositif de la figure 4 ;
- la figure 6 représente l'ensemble de la figure 5 dans l'état assemblé, l'électrode de retenue étant dans sa position de libération ; et
- la figure 7 est une vue similaire à la figure 6, l'électrode de retenue étant dans sa position de retenue.

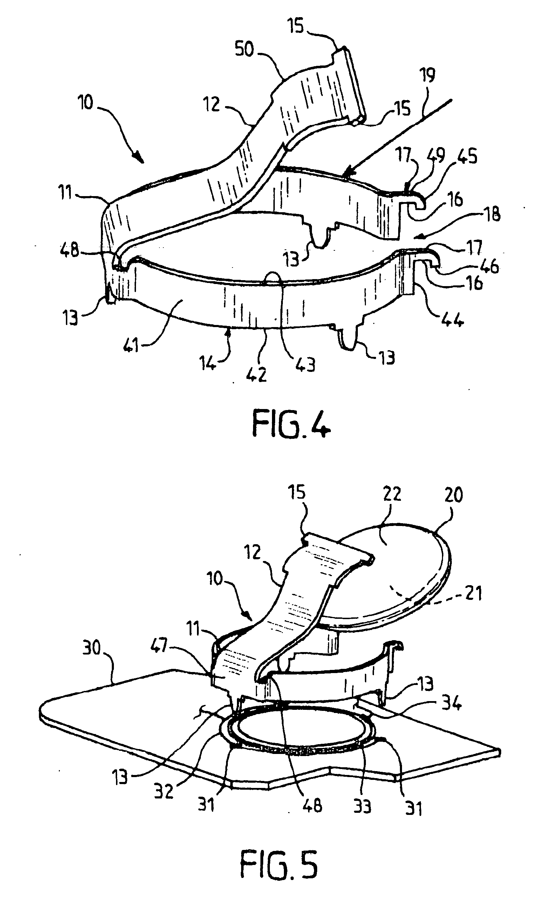

En référence aux figures 4 à 7, on décrit un ensemble formé d'un support 30 auquel est fixé un dispositif de retenue et de connexion 10 pour une pile aplatie.

Le dispositif 10 est destiné à retenir et connecter une pile de forme aplatie 20 sur le support 30 de forme sensiblement plane, par exemple une plaque de support pour circuit imprimé munie d'un circuit imprimé électrique. Le dispositif 10 comprend un corps 14 de forme cylindrique globalement circulaire. Trois ergots 13 sont fixé au corps 14, du côté tourné vers le support 30. Les ergots 13 sont répartis à 120° l'un de l'autre.

Le support 30 présente trois alésages 31, disposés les uns par rapport aux autres de manière à recevoir les ergots 13. Une piste électrique 32 relie les trois alésages entre eux. Les ergots 13 sont soudés dans les alésages 31, ce qui permet de réaliser une fixation mécanique du dispositif 10 sur le support 30 et une connexion électrique entre le dispositif 10 et la piste 32. La disposition uniforme, à 120° les uns des autres, des ergots 13 et des alésages 31, permet de garantir la forme circulaire du corps 14. Bien entendu, il pourrait y avoir plus ou moins de trois ergots et de trois alésages. Le corps 14 pourrait présenter une autre forme, non circulaire, selon la forme de la pile à recevoir. Sur la figure 5, la piste 32 est représentée du même côté du support 30 que le dispositif 10. Bien entendu, elle pourrait se trouver du côté opposé. Le support 30 présente également une électrode de contact 33, agencée entre les trous 31. L'électrode de contact 33 est reliée à une piste 34.

Le corps 14 comprend deux bras latéraux 41 reliés par une portion centrale 47. Les bras latéraux 41 sont incurvés de manière à définir un espace de réception de forme circulaire pour la pile 20. Les deux bras 41 et la portion centrale 47 présentent une arrête inférieure 42 commune, en contact avec le support 30. Du côté opposé au support 30, les deux bras latéraux 41 présentent chacun une arrête supérieure 43, de même niveau. La portion centrale 47 présente une arrête supérieure 48 de niveau inférieure au niveau des arrêtes 43. A son extrémité opposée à la portion centrale 47, chaque bras latéral 41 présente un rebord d'extrémité 44 qui s'étend vers l'extérieur du corps 14. Entre les deux rebord d'extrémité, le corps 14 présente une ouverture latérale 18 qui interrompt la forme cylindrique du corps 14 sur une partie de son périmètre. Alternativement à la configuration qui vient d'être décrite, le corps pourrait ne comprendre qu'un seul bras latéral.

Le dispositif 10 comprend deux crochets 17. Chaque crochet 17 est fixé à un rebord d'extrémité 44 respectif, et comprend un bras horizontal 49 prolongeant le rebord d'extrémité 44 au niveau de l'arrête supérieure 43, et un bras vertical 46 s'étendant vers le support 30 depuis l'extrémité du bras horizontal 49. De cette façon, le crochets 17 définissent deux encoches 16 ouvertes du côté tourné vers le support 30.

Le dispositif 10 comprend une électrode de retenue 12. L'électrode de retenue 12 est reliée au corps 14 par une portion déformable de l'électrode 12 formant une charnière élastique 11, au niveau de l'arrête supérieure 48 de la portion centrale 47. L'électrode de retenue 12 est une lame élastique dont la forme sera détaillée ci-dessous. A son extrémité opposée à la charnière élastique 11, l'électrode de retenue 12 présente deux portions en saillie 15 transversalement à la direction longitudinale de l'électrode 12. La largeur de l'électrode 12, le long d'au moins une portion 50 partant des portions en saille 15, est sensiblement égale à la largeur de l'ouverture latérale 18.

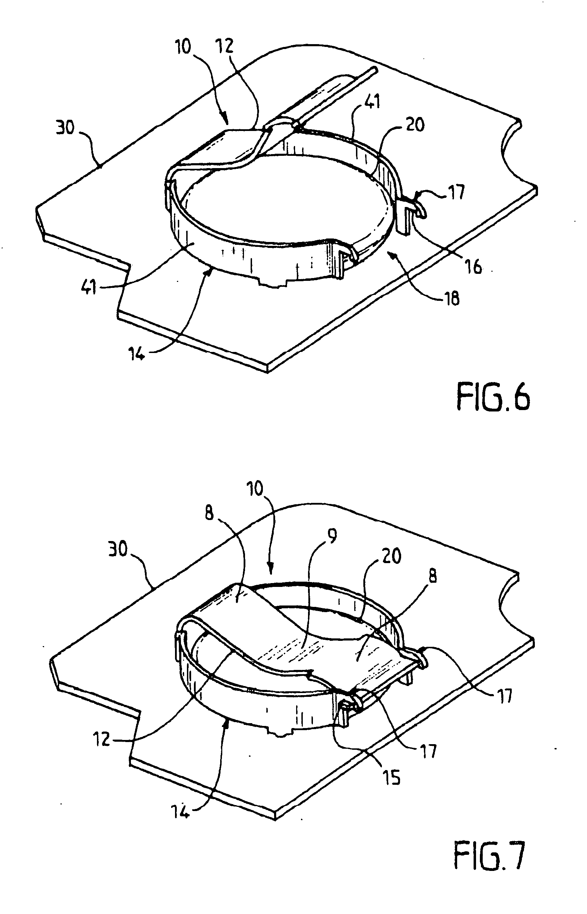

La charnière élastique 11 permet à l'électrode 12 de pivoter par rapport au corps 14. La charnière 11 sollicite élastiquement l'électrode 12 dans une position de libération, représentée sur les figures 4, 5 et 6. En pivotant, l'électrode 12 peut également prendre une position de retenue, représentée sur la figure 7.

Dans sa position de libération, l'électrode de retenue 12 forme un angle d'ouverture avec le support 30. Ainsi, l'électrode 12 libère un passage, représenté par la flèche 19, orienté de manière oblique au support 30. L'angle d'ouverture est suffisant pour qu'il soit possible de faire passer la pile 20 dans le passage 19. Cet angle est avantageusement supérieur à 30°, par exemple compris entre 60° et 90°. Ainsi, en orientant la pile 20 sensiblement parallèlement à l'électrode de retenue 12, il est possible de déplacer la pile 20 sensiblement parallèlement à l'électrode 12, le long du passage 19. Ensuite, lorsqu'une portion périphérique de la pile arrive en contact avec le support 30, à proximité de la portion centrale 47 du corps 14, il est possible faire pivoter la pile 20 contre le support 30 de manière à placer la pile 20 dans l'espace de réception défini par le corps 14, de manière qu'une portion de contact 21 de la pile 20 est en contact avec l'électrode de contact 33. En suivant un déplacement inverse, il est également possible de retirer la pile 20. Cette opération peut être facilement réalisée en manipulant la pile à l'aide d'un doigt par l'ouverture latérale 18.

Dans sa position de retenue, l'électrode 12 s'étend sensiblement parallèlement au support 30 et à distance de celui-ci. Les portions en saillies 15 coopèrent avec les encoches 16 pour maintenir l'électrode 12 dans sa position de retenue, malgré la sollicitation exercée par la charnière élastique 11. Quand la pile est placée dans l'espace de réception, elle est située entre le support 30 et l'électrode 12. L'électrode de retenue 12 entre en contact avec une portion de contact 22 de la pile 20. Ainsi, par l'intermédiaire de la charnière élastique 11, du corps 14 et des ergots 13, l'électrode de retenue 12 permet de réaliser une liaison électrique entre la portion de contact 22 et la piste 32.

L'électrode 12 est une lame élastique de forme ondulée. Dans l'exemple représenté, elle présente, vu depuis le côté opposé au support 30, deux portions bombées 8 et une portion concave 9 située entre les deux portions bombées 8. Ainsi, en se déformant élastiquement, l'électrode 12 est apte à s'allonger. Quand l'électrode 12 est dans sa position de retenue, il est possible de provoquer un tel allongement en appuyant sur une des portions bombées 8, alors que la portion concave 9 est en contact et glisse sur la pile 20. Quand l'électrode 12 est dans sa position de libération, il est possible de provoquer un tel allongement en appuyant sur l'électrode de manière à la faire pivoter dans sa position de retenue. Au cours de ce pivotement, chaque portion en saillie 15 entre en contact avec une surface de came 45 située au niveau de la liaison entre un bras 49 et un bras 46. La surface de came 45 est inclinée vers le support 30 en s'éloignant de la charnière 11. Ainsi, si on continue à appuyer sur l'électrode 12, les portions en saillie 15 coopèrent avec les surfaces de came 45, ce qui provoque l'allongement de l'électrode 12.

Quand l'allongement de l'électrode 12 est suffisant pour que les portions en saillie 15 passent au delà de l'extrémité extérieure des bras 49, il est possible d'engager ou de désengager les portions 15 dans les encoches 16. L'électrode 12 peut alors passer de sa position de libération à sa position de retenue ou inversement.

Comme expliqué ci-dessus, la portion 9 est concave vu du côté opposé au support 30. Dit autrement, elle présente une convexité tournée vers le support. Cette convexité est telle que, si l'électrode 12 était placée dans sa position de retenue en l'absence de la pile 20, la distance minimale entre l'électrode 12 et l'électrode 33 du support 30 serait inférieure à l'épaisseur de la pile 20. Ainsi, lorsque l'électrode 12 est dans sa position de retenue et que la pile 20 est présente, l'électrode 12 est élastiquement déformée et exerce, au niveau de la portion 9, une pression de contact sur la pile 20, qui empêche le déplacement de la pile 20. On appréciera que pour exercer cette pression de contact, il n'est pas nécessaire de dimensionner précisément le dispositif 10. Au contraire, il suffit qu'en l'absence de la pile 20, la distance minimale entre l'électrode 12 et l'électrode 33 du support 30 soit inférieure à l'épaisseur de la pile 20.

La pression de contact au niveau de la portions 9 résulte également en une déformation élastique correspondante des portions bombées 8. Cette déformation est telle que les portions en saillie 15 de l'électrode 12 sont poussées en directions des bras 46 et 49, ce qui empêche le déverrouillage de l'électrode 12. De plus, dans la position de retenue de l'électrode 12, la portion 50 de l'électrode est située dans l'ouverture latérale 18 et coopèrent avec les rebords d'extrémités 44, ce qui empêche un débattement transversal de l'électrode 12 et donc aussi son déverrouillage.

Le dispositif 10 est réalisé en une seule pièce de métal élastique, par exemple en alliage Cupro-Nickel inoxydable et soudable. Il peut être fabriqué en découpant une forme adaptée dans une tôle métallique plane, puis en conformant cette forme à l'aide d'une presse à froid au cours de plusieurs étapes de formage successives.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre des revendications.

## Revendications

1. Dispositif de retenue et de connexion (10) pour une pile (20) de forme aplatie ayant deux portions de contact (21, 22) de polarités opposées sur deux côtés opposés de ladite pile, ledit dispositif étant destiné à retenir ladite pile sur un support (30) muni d'une électrode de contact (33) destinée à établir un contact électrique avec une première portion de contact (21) de ladite pile et d'un conducteur électrique (32) auquel une deuxième portion de contact (22) de ladite pile doit être reliée, ledit dispositif comprenant au moins un organe de fixation (13) apte à coopérer avec ledit support pour fixer ledit dispositif sur ledit support, une électrode de retenue (12) liée audit organe de fixation de manière à pouvoir prendre une position de retenue lorsque ledit dispositif est fixé audit support, ladite électrode de retenue dans la position de retenue s'étendant sensiblement parallèlement au support à distance dudit support de manière à pouvoir recevoir la pile entre l'électrode de retenue et le support et établir un contact électrique entre ladite deuxième portion de contact de ladite pile et l'électrode de retenue, au moins un organe de connexion (13) relié électriquement à ladite électrode de retenue et destiné à établir une liaison avec le circuit électrique du support lorsque ledit dispositif est fixé audit support, ladite électrode de retenue étant apte à pivoter par rapport audit organe de fixation depuis ladite position de retenue de manière à s'écarter du support jusqu'à une position de libération dans laquelle elle libère un passage (19) permettant de placer ladite pile sur le support et/ou d'enlever ladite pile du support, ledit passage étant orienté de manière oblique ou perpendiculaire au support, ledit dispositif de retenue comprenant un moyen de sollicitation élastique (11) apte à solliciter ladite électrode de retenue, **caractérisé en ce que** ledit moyen de sollicitation élastique (11) est apte à solliciter ladite électrode de retenue vers ladite position de libération, ledit dispositif de retenue comprenant un organe de verrouillage (16) destiné à être fixé au support et apte à maintenir ladite électrode de retenue dans ladite position de retenue.

2. Dispositif selon la revendication 1, **caractérisé par le fait que** ledit organe de verrouillage est solidaire dudit organe de fixation.

3. Dispositif selon la revendication 1 ou la revendication 2, **caractérisé par le fait que** ladite électrode de retenue comprend une lame élastique présentant une courbure (9) dont la convexité est tournée vers le support dans ladite position de retenue, ladite lame élastique étant apte à se déformer élastiquement dans ladite position de retenue de manière à exercer une pression de contact sur ladite pile.

4. Dispositif selon l'une des revendications 1 à 3, **caractérisé par le fait que** ladite électrode de retenue présente une extrémité liée de manière pivotante audit organe de fixation et une extrémité libre muni d'un élément d'accrochage (15) apte à coopérer avec ledit organe de verrouillage et est conformée de manière à être apte à s'allonger élastiquement, ledit organe de verrouillage étant conformé de manière à imposer un allongement de l'électrode de retenue lors de l'engagement ou du dégagement avec ledit organe de verrouillage.

5. Dispositif selon la revendication 4, **caractérisé par le fait qu'**il présente une surface de base (42) destinée à être appliquée sur le support lorsque le dispositif est fixé sur le support, l'organe de verrouillage présentant une surface de came (45) tournée à l'opposée de ladite surface de base, ladite surface de came étant située au droit de l'extrémité libre de l'électrode de retenue et étant inclinée vers ladite surface de base en s'éloignant de ladite extrémité liée de l'électrode de retenue de manière à provoquer l'allongement de ladite électrode de retenue en réponse à une pression de ladite extrémité libre contre ladite surface de came.

6. Dispositif selon l'une des revendications 1 à 5, **caractérisé par le fait qu'**il comprend un corps (14) apte à délimiter au moins un côté d'un espace de réception pour ladite pile, ledit corps étant solidaire de l'organe de fixation destiné à fixer le dispositif sur le support.

7. Dispositif selon la revendication 6, **caractérisé par le fait que** le corps comprend une surface de base (42) destinée à être appliquée sur le support, ledit organe de fixation état liée à ladite surface de base du corps, le corps comprenant une surface supérieure (43, 48) opposée à ladite surface de base, l'électrode de retenue étant liées à ladite surface supérieure du corps.

8. Dispositif selon la revendication 6 ou la revendication 7 prise en combinaison avec la revendication 2, **caractérisé par le fait que** l'électrode de retenue est liée au corps au niveau d'une portion de liaison (47) du corps, le corps comprenant au moins un bras (41) s'étendant de manière incurvée en s'éloignant à partir de ladite portion de liaison pour définir l'espace de réception dans la concavité dudit bras, ledit organe de verrouillage étant lié au corps au niveau d'une extrémité dudit bras opposée à ladite portion de liaison.

9. Dispositif selon l'une des revendications 6 à 8 prise en combinaison avec la revendication 2, **caractérisé par le fait que** ledit moyen de sollicitation élastique comprend une charnière élastique (11) reliant ladite électrode de retenue audit corps.

10. Dispositif selon la revendication 9, **caractérisé par le fait que** ladite électrode de retenue présente, à son extrémité opposée à ladite charnière élastique, deux portions en saillie transversalement à l'électrode de retenue (15), ledit organe de verrouillage comprenant deux encoches (16) ménagées dans ledit corps à l'opposé de ladite charnière élastique, lesdites portions en saillies coopérant avec lesdites encoches dans ladite position de retenue de ladite électrode de retenue.

11. Dispositif selon la revendication 10, **caractérisé par le fait que** lesdites encoches sont ouvertes du côté destiné à être tourné vers le support.

12. Dispositif selon l'une des revendications 6 à 11, **caractérisé par le fait que** ledit corps présente une ouverture latérale (18) permettant de manipuler ladite pile avec un doigt, lorsque ladite pile est dans ledit espace de réception.

13. Dispositif selon l'une des revendications 1 à 12, **caractérisé par le fait qu'**il comprend au moins un ergot métallique (13) lié à l'électrode de retenue, ledit ergot métallique constituant à la fois ledit organe de fixation et ledit organe de connexion.

14. Dispositif selon la revendication 13 prise en combinaison avec la revendication 6, **caractérisé par le fait que** ledit au
moins un ergot est fixé audit corps.

15. Dispositif selon l'une des revendications 1 à 14, **caractérisé par le fait que** ledit dispositif est réalisé en une seule pièce de métal élastique.

## Claims

1. Retention and connection device (10) for a battery (20) of flattened shape having two contact portions (21, 22) of opposite polarities on two opposite sides of the said battery, the said device being designed to retain the said battery on a support (30) furnished with a contact electrode (33) designed to establish an electric contact with a first contact portion (21) of the said battery and of an electric conductor (32) to which a second contact portion (22) of the said battery must be connected, the said device comprising at least one attachment member (13) capable of interacting with the said support to attach the said device to the said support, a retention electrode (12) connected to the said attachment member so as to be able to take a retention position when the said device is attached to the said support, the said retention electrode in the retention position extending substantially parallel to the support at a distance from the said support so as to be able to receive the battery between the retention electrode and the support and to establish an electric contact between the said second contact portion of the said battery and the retention electrode, at least one connection member (13) electrically connected to the said retention electrode and designed to establish a link with the electric circuit of the support when the said device is attached to the said support, the said retention electrode being capable of pivoting relative to the said attachment member from the said retention position so as to move away from the support to a release position in which it frees a passage (19) making it possible to place the said battery on the support and/or to remove the said battery from the support, the said passage being oriented obliquely or perpendicularly to the support, the said retention device comprising an elastic means (11) of stress capable of stressing the said retention electrode, **characterized in that** the said elastic pushing means (11) is capable of pushing the said retention electrode towards the said release position, the said retention device comprising a locking member (16) designed to be attached to the support and capable of keeping the said retention electrode in the said retention position.

2. Device according to Claim 1, **characterized in that** the said locking member is fixedly attached to the said attachment member.

3. Device according to Claim 1 or Claim 2, **characterized in that** the said retention electrode comprises an elastic strip having a curve (9) whose convexity is turned towards the support in the said retention position, the said elastic strip being capable of deforming elastically in the said retention position so as to exert a contact pressure on the said battery.

4. Device according to one of Claims 1 to 3, **characterized in that** the said retention electrode has one end connected pivotingly to the said attachment member and one free end furnished with a coupling element (15) capable of interacting with the said locking member and is made so as to be able to lengthen elastically, the said locking member being made so as to make the retention electrode lengthen during the engagement or disengagement with the said locking member.

5. Device according to Claim 4, **characterized in that** it has a base surface (42) designed to be pressed on the support when the device is attached to the support, the locking member having a cam surface (45) facing in the opposite direction from the said base surface, the said cam surface being situated in line with the free end of the retention electrode and being inclined towards the said base surface while moving away from the said connected end of the retention electrode so as to cause the said retention electrode to lengthen in response to a pressure of the said free end against the said cam surface.

6. Device according to one of Claims 1 to 5, **characterized in that** it comprises a body (14) capable of delimiting at least one side of a reception space for the said battery, the said body being fixedly attached to the attachment member designed to attach the device to the support.

7. Device according to Claim 6, **characterized in that** the body comprises a base surface (42) designed to be pressed on the support, the said attachment member being connected to the said base surface of the body, the body comprising an upper surface (43, 48) opposite to the said base surface, the retention electrode being connected to the said upper surface of the body.

8. Device according to Claim 6 or Claim 7 taken in combination with Claim 2, **characterized in that** the retention electrode is linked to the body at a linkage portion (47) of the body, the body comprising at least one arm (41) extending in a curved manner while moving away from the said linkage portion in order to define the reception space in the concavity of the said arm, the said locking member being linked to the body at an end of the said arm opposite to the said linkage portion.

9. Device according to one of Claims 6 to 8 taken in combination with Claim 2, **characterized in that** the said elastic pushing means comprises an elastic hinge (11) connecting the said retention electrode to the said body.

10. Device according to Claim 9, **characterized in that** the said retention electrode has, at its end opposite to the said elastic hinge, two portions protruding transversely to the retention electrode (15), the said locking member comprising two notches (16) made in the said body opposite to the said elastic hinge, the said protruding portions interacting with the said notches in the said retention position of the said retention electrode.

11. Device according to Claim 10, **characterized in that** the said notches are open on the side intended to be facing towards the support.

12. Device according to one of Claims 6 to 11, **characterized in that** the said body has a side opening (18) making it possible to handle the said battery with a finger, when the said battery is in the said reception space.

13. Device according to one of Claims 1 to 12, **characterized in that** it comprises at least one metal lug (13) linked to the retention electrode, the said metal lug forming both the said attachment member and the said connection member.

14. Device according to Claim 13 taken in combination with Claim 6, **characterized in that** the said at least one lug is attached to the said body.

15. Device according to one of Claims 1 to 14, **characterized in that** the said device is made in a single piece of elastic metal.

## Patentansprüche

1. Halte- und Anschlussvorrichtung (10) für eine Flachbatterie (20), die zwei Kontaktabschnitte (21, 22) mit entgegengesetzter Polarität auf zwei gegenüberliegenden Seiten der Batterie aufweist, wobei die Vorrichtung dazu dient, die Batterie auf einem Träger (30) zu halten, der mit einer Kontaktelektrode (33) zur Herstellung eines elektrischen Kontaktes mit einem ersten Kontaktabschnitt (21) der Batterie und einem elektrischen Leiter (32), mit dem ein zweiter Kontaktabschnitt (22) der Batterie verbunden werden soll, versehen ist, wobei die Vorrichtung wenigstens ein Befestigungsmittel (13), das mit dem Träger zur Befestigung der Vorrichtung auf dem Träger zusammenwirken kann, eine Halteelektrode (12), die mit dem Befestigungsmittel so verbunden ist, dass sie eine Halteposition einnehmen kann, wenn die Vorrichtung auf dem Träger befestigt ist, wobei die Halteelektrode in der Halteposition im wesentlichen parallel zu dem Träger in einem solchen Abstand von dem Träger verläuft, dass die Batterie zwischen der Halteelektrode und dem Träger eingesetzt und ein elektrischer Kontakt zwischen dem zweiten Kontaktabschnitt der Batterie und der Halteelektrode hergestellt werden kann, wenigstens ein Anschlussmittel (13), das elektrisch mit der Halteelektrode verbunden ist und zur Herstellung einer Verbindung mit dem elektrischen Schaltkreis des Trägers dient, wenn die Vorrichtung auf dem Träger befestigt ist, umfasst, wobei die Halteelektrode von der Halteposition aus so bezüglich des Befestigungsmittels schwenkbar ist, dass sie sich von dem Träger bis zu einer Freigabeposition entfernt, in welcher sie einen Durchlass (19) freigibt, der das Auflegen der Batterie auf den Träger und/oder das Herunternehmen der Batterie von dem Träger ermöglicht, wobei der Durchlass schräg oder senkrecht zu dem Träger orientiert ist, wobei die Haltevorrichtung ein elastisches Vorspannmittel (11) umfasst, welches die Halteelektrode vorspannen kann, **dadurch gekennzeichnet, dass** das elastische Vorspannmittel (11) die Halteelektrode in Richtung der Freigabeposition vorspannen kann, wobei die Haltevorrichtung ein Verriegelungsmittel (16) aufweist, das auf dem Träger befestigbar ist und die Halteelektrode in der Halteposition festhalten kann.

2. Vorrichtung gemäß Anspruch 1, **dadurch gekennzeichnet, dass** das Verriegelungsmittel mit dem Befestigungsmittel fest verbunden ist.

3. Vorrichtung gemäß Anspruch 1 oder Anspruch 2, **dadurch gekennzeichnet, dass** die Halteelektrode einen elastischen Streifen umfasst, der eine Krümmung (9) aufweist, deren Wölbung in der Halteposition in Richtung Träger gerichtet ist, wobei der elastische Streifen sich in der Halteposition derart elastisch verformen kann, dass ein Kontaktdruck auf die Batterie ausgeübt wird.

4. Vorrichtung gemäß einem der Ansprüche 1 bis 3, **dadurch gekennzeichnet, dass** die Halteelektrode ein Ende, das schwenkbar mit dem Befestigungsmittel verbunden ist, und ein freies Ende mit einem Rastelement (15), das mit dem Verriegelungsmittel zusammenwirken kann, aufweist und so ausgebildet ist, dass sie sich elastisch verlängern kann, wobei das Verriegelungsmittel so ausgestaltet ist, dass der Halteelektrode bei dem Eingreifen in oder dem Lösen aus dem Verriegelungsmittel eine Verlängerung aufgeprägt wird.

5. Vorrichtung gemäß Anspruch 4, **dadurch gekennzeichnet, dass** sie eine Basisfläche (42) aufweist, die auf dem Träger in Anlage kommen kann, wenn die Vorrichtung auf dem Träger befestigt ist, wobei das Verriegelungsmittel eine Steuerfläche (45) aufweist, die von der Basisfläche weggerichtet ist, wobei sich die Steuerfläche auf Höhe des freien Endes der Halteelektrode befindet und in Richtung Basisfläche geneigt ist und sich dabei von dem freien Ende der Halteelektrode derart entfernt, dass eine Verlängerung der Halteelektrode infolge eines Drucks des freien Endes gegen die Steuerfläche hervorgerufen wird.

6. Vorrichtung gemäß einem der Ansprüche 1 bis 5, **dadurch gekennzeichnet, dass** sie einen Körper (14) umfasst, der wenigstens eine Seite eines Aufnahmeraums für die Batterie begrenzen kann, wobei der Körper fest mit dem zur Befestigung der Vorrichtung auf dem Träger vorgesehenen Befestigungsmittel verbunden ist.

7. Vorrichtung gemäß Anspruch 6, **dadurch gekennzeichnet, dass** der Körper eine Basisfläche (42) aufweist, die auf dem Träger in Anlage kommen kann, wobei das Befestigungsmittel mit der Basisfläche des Körpers verbunden ist, wobei der Körper eine obere Fläche (43, 48) aufweist, welche der Basisfläche gegenüberliegt, wobei die Halteelektrode mit der oberen Fläche des Körpers verbunden ist.

8. Vorrichtung gemäß Anspruch 6 oder Anspruch 7 in Kombination mit Anspruch 2, **dadurch gekennzeichnet, dass** die Halteelektrode auf Höhe eines Verbindungsbereichs (47) des Körpers mit dem Körper verbunden ist, wobei der Körper wenigstens einen Arm (41) aufweist, der sich gekrümmt ausgehend von dem Verbindungsbereich weg erstreckt, um den Aufnahmeraum in der Ausbohrung des Arms zu definieren, wobei das Verriegelungsmittel auf Höhe eines Endes des Arms, das dem Verbindungsbereich gegenüberliegt, mit dem Körper verbunden ist.

9. Vorrichtung gemäß einem der Ansprüche 6 bis 8 in Kombination mit Anspruch 2, **dadurch gekennzeichnet, dass** das elastische Vorspannmittel ein elastisches Scharnier (11) umfasst, welches die Halteelektrode mit dem Körper verbindet.

10. Vorrichtung gemäß Anspruch 9, **dadurch gekennzeichnet, dass** die Halteelektrode an ihrem dem elastischen Scharnier gegenüberliegenden Ende zwei quer zu der Halteelektrode vorspringende Abschnitte (15) aufweist, wobei das Verriegelungsmittel zwei Auskerbungen (16) aufweist, die gegenüber von dem elastischen Scharnier in dem Körper ausgespart sind, wobei die vorspringenden Abschnitte in der Halteposition der Halteelektrode mit den Auskerbungen zusammenwirken.

11. Vorrichtung gemäß Anspruch 10, **dadurch gekennzeichnet, dass** die Auskerbungen auf der Seite, die zum Träger gerichtet sein soll, offen sind.

12. Vorrichtung gemäß einem der Ansprüche 6 bis 11, **dadurch gekennzeichnet, dass** der Körper eine seitliche Öffnung (18) aufweist, die es ermöglicht, die Batterie mit einem Finger zu manipulieren, wenn sich die Batterie in dem Aufnahmeraum befindet.

13. Vorrichtung gemäß einem der Ansprüche 1 bis 12, **dadurch gekennzeichnet, dass** sie wenigstens einen mit der Halteelektrode verbundenen metallischen Sporn (13) umfasst, wobei der metallische Sporn gleichzeitig das Befestigungsmittel und das Anschlussmittel bildet.

14. Vorrichtung gemäß Anspruch 13 in Kombination mit Anspruch 6, **dadurch gekennzeichnet, dass** wenigstens ein Sporn an dem Körper befestigt ist.

15. Vorrichtung gemäß einem der Ansprüche 1 bis 14, **dadurch gekennzeichnet, dass** die Vorrichtung einstückig aus einem elastischen Metall hergestellt ist.
